# EUROPÄISCHE PATENTSCHRIFT

(11) **EP 2 864 028 B1**
(45) Veröffentlichungstag und Bekanntmachung des Hinweises auf die Patenterteilung: **30.11.2016**
(21) Anmeldenummer: 13722462.2
(22) Anmeldetag: 15.05.2013
(51) Int. Cl.: B01F 15/00, B01F 5/06, B29B 7/74, B05C 5/02

(54) **VORRICHTUNG ZUM AUFTRAGEN EINER PASTÖSEN MASSE**
DEVICE FOR APPLYING A PASTY MASS
DISPOSITIF POUR APPLIQUER UNE MATIÈRE PÂTEUSE

(30) Priorität: 22.06.2012 DE 102012012360
(43) Veröffentlichungstag der Anmeldung: 29.04.2015
(73) Patentinhaber: SCA Schucker GmbH & Co. KG, 75015 Bretten (DE)
(72) Erfinder: KÖLLE, Bernd, 75038 Oberderdingen (DE); SCHOLL, Patrick, 74251 Ellhofen (DE)
(74) Vertreter: Patentanwälte Bregenzer und Reule Partnerschaftsgesellschaft mbB
(86) Internationale Anmeldenummer: PCT/EP2013/060007
(87) Internationale Veröffentlichungsnummer: WO 2013/189665

(56) Entgegenhaltungen:
- WO-A1-2009/149854
- DE-A1- 3 912 920
- DE-C1- 10 209 241
- GB-A- 2 348 384

## Beschreibung

Die Erfindung betrifft eine Vorrichtung zum Auftragen einer einen mindestens zweikomponentigen, härtbaren Kleb- oder Dichtstoff aufweisenden pastösen Masse.

Bekannte Vorrichtungen dieser Art werden beispielsweise zum Auftragen von Zweikomponentenklebstoffen auf Werkstücke verwendet. Sie weisen eine sogenannte Lanze auf, einen langgestreckten Körper, in dem für jede der Komponenten ein Materialzuführkanal verläuft, der über einen Anschluss mit einer Zuführleitung für die Komponente verbunden ist, und der mittels eines auf einen Ventilsitz wirkenden Ventils absperrbar ist. Die Materialzuführkanäle verlaufen bis zu einer Lanzenspitze und münden dort in eine oder mehrere Austrittsöffnungen. An die Lanzenspitze kann eine Mischeinrichtung angeschlossen werden, in der die Komponenten miteinander vermischt werden, oder die Durchmischung findet bereits in der Lanze statt, so dass an die Lanzenspitze direkt eine Auftragsdüse angeschlossen werden kann, mit der die pastöse Masse auf ein Werkstück aufgetragen werden kann. Nachteilig an den bekannten Vorrichtungen ist, dass die Lanze nicht um ihre Längsachse gedreht werden kann, da sich sonst die Zuführleitungen um die Lanze wickeln können. Insbesondere dann, wenn die Auftragsdüse gekrümmt ist, ist eine Drehbarkeit der Lanze aber für einige Anwendungsbereiche, beispielsweise wenn die Lanze an einem Roboter angeordnet ist, erwünscht.

Der Erfindung liegt daher die Aufgabe zugrunde, eine Vorrichtung der eingangs genannten Art zu schaffen, die flexibler einsetzbar ist.

Dokument DE-A1-39 12 920 offenbart eine Vorrichtung gemäß dem Oberbegriff des Anspruchs 1.

Die Aufgabe wird erfindungsgemäß durch eine Vorrichtung mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, die Komponenten mittels einer Drehdurchführung in den jeweiligen Materialzuführkanal einzuleiten, so dass die Lanze drehbar in einem Gehäuse aufgenommen werden kann. Wenn sich die Lanze um die Gehäuselängsachse dreht, kann das Gehäuse ortsfest bleiben, so dass die an das Gehäuse angeschlossenen Leitungen nicht mitgedreht werden. An der Lanzenspitze kann zudem eine Mischeinrichtung zum Mischen der Komponenten unter Bildung des Kleb- oder Dichtstoffs befestigt werden, in die die Materialzuführkanäle münden. Des Weiteren kann an der Lanzenspitze oder an einer der Lanze abgewandten Seite der Mischeinrichtung eine Auftragsdüse mit einer Auftragsöffnung zum Auftragen der pastösen Masse auf ein Werkstück befestigt werden. Die Auftragsdüse weist einen von der Mischeinrichtung bzw. von der Lanzenspitze bis zur Auftragsöffnung verlaufenden Materialauftragskanal zum Transport der pastösen Masse von der Mischeinrichtung bzw. von der Lanzenspitze zur Auftragsöffnung auf, der mindestens einen gekrümmten Abschnitt aufweist und somit bezüglich der Gehäuselängsachse nicht rotationssymmetrisch ist. Solche Auftragsdüsen kommen insbesondere da zur Anwendung, wo ein Auftrag der pastösen Masse quer zur Gehäuselängsachse oder parallel zur Gehäuselängsachse in Richtung zurück zur Lanzenspitze erfolgen soll, beispielsweise wenn die Auftragsdüse ein Werkstück umgreifen und von hinten mit der pastösen Masse beschichten soll.

Zweckmäßig weisen die Schließventile jeweils einen in einem im Gehäuse angeordneten Zylinder linear verschieblich aufgenommenen und durch ein Druckmedium beaufschlagbaren Kolben auf, wobei eine weitere Drehdurchführung zur Einleitung des Druckmediums durch den Mantel des Gehäuses in den jeweiligen Zylinder vorgesehen ist. Dadurch wird der Tatsache Rechnung getragen, dass als Schließventile bei solchen Auftragsvorrichtungen überwiegend druckbetätigte Nadelventile zum Einsatz kommen, wobei auch die Einleitung des Druckmediums auf gleiche Weise erfolgen soll, wie die Einleitung der Komponenten des Kleb- oder Dichtstoffs, so dass sich auch die Zuführleitungen des Druckmediums bei einer Drehung der Lanze nicht um diese herumwickeln können.

Gemäß der Erfindung münden die Materialzuführkanäle jeweils in einen Endkanal, der in eine Austrittsöffnung an der Lanzenspitze mündet. Im Endkanal kann bereits eine erste Vermischung der Komponenten erfolgen. Zweckmäßig münden die Materialzuführkanäle gemessen in einer sich zur Austrittsöffnung erstreckenden Längsrichtung des Endkanals in unterschiedlichen Abständen zur Austrittsöffnung in den Endkanal. Die Materialströme der Komponenten vereinigen sich dann im Endkanal, indem ein Materialstrom in den anderen mündet. Dabei wird bevorzugt, dass sich der Querschnitt des Endkanals zur Austrittsöffnung hin vergrößert, entsprechend der Zunahme des im Endkanal fließenden Materials zur Austrittsöffnung hin. Insbesondere kann sich der Querschnitt des Endkanals an jeder Stelle, an der ein Materialzuführkanal in ihn mündet, vergrößern, so dass der Materialzuführkanal an jeder Stelle bis zur Austrittsöffnung ganz oder weitestgehend mit Material gefüllt ist. Der Endkanal ist vorteilhaft in einem Boden der Lanze an der Lanzenspitze angeordnet und durch eine die Ventilsitze aufweisende Abdeckplatte abgedeckt.

Gemäß einer vorteilhaften Weiterbildung ist ein im Inneren der Lanze verlaufender weiterer Zuführkanal für ein Spülmedium vorgesehen, der zur Lanzenspitze verläuft, und es ist eine für das Einleiten des Spülmediums in den weiteren Zuführkanal bestimmte Drehdurchführung vorgesehen. Nach Ende eines Auftragsvorgangs kann die Vorrichtung mit dem Spülmedium durchgespült werden, so dass Reste des härtbaren Kleb- oder Dichtstoffs weitestgehend aus ihr entfernt werden. Bei der Ausführungsform, in der die Materialzuführkanäle in einen Endkanal münden, ist es von Vorteil, wenn der weitere Zuführkanal weiter von der Austrittsöffnung entfernt in den Endkanal mündet als die Materialzuführkanäle, um Reste der Komponenten aus dem Endkanal herausspülen zu können.

Im Folgenden wird die Erfindung anhand eines in der Zeichnung schematisch dargestellten Ausführungsbeispiels näher erläutert. Es zeigen
- Fig. 1: eine Auftragsvorrichtung im Längsschnitt und

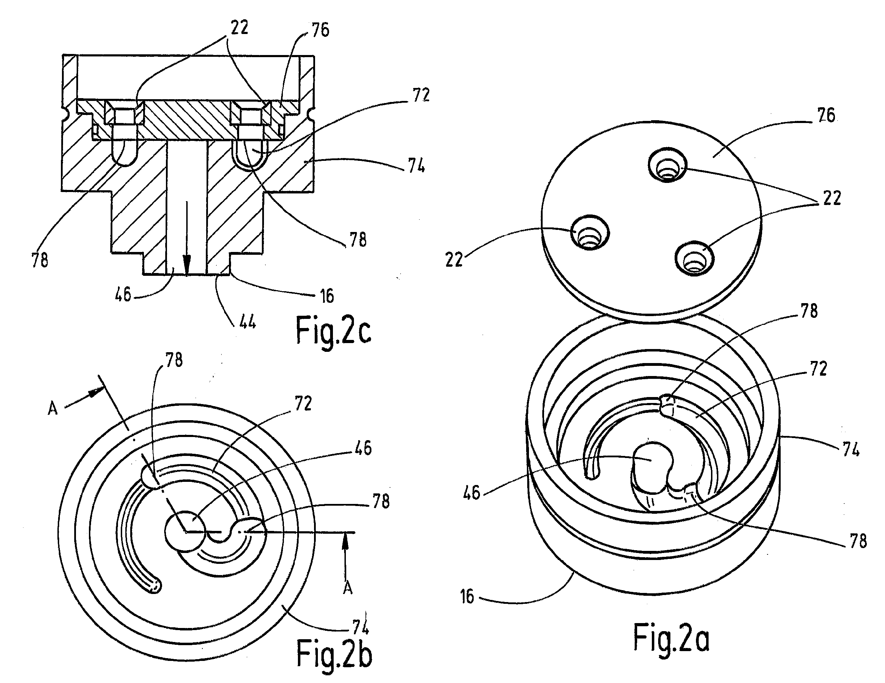

- Fig. 2a: bis c eine alternative Ausführungsform der Lanzenspitze in perspektivischer Darstellung mit abgenommener Abdeckplatte, in Draufsicht ohne Abdeckplatte und im Schnitt entlang der Linie A-A mit Abdeckplatte.

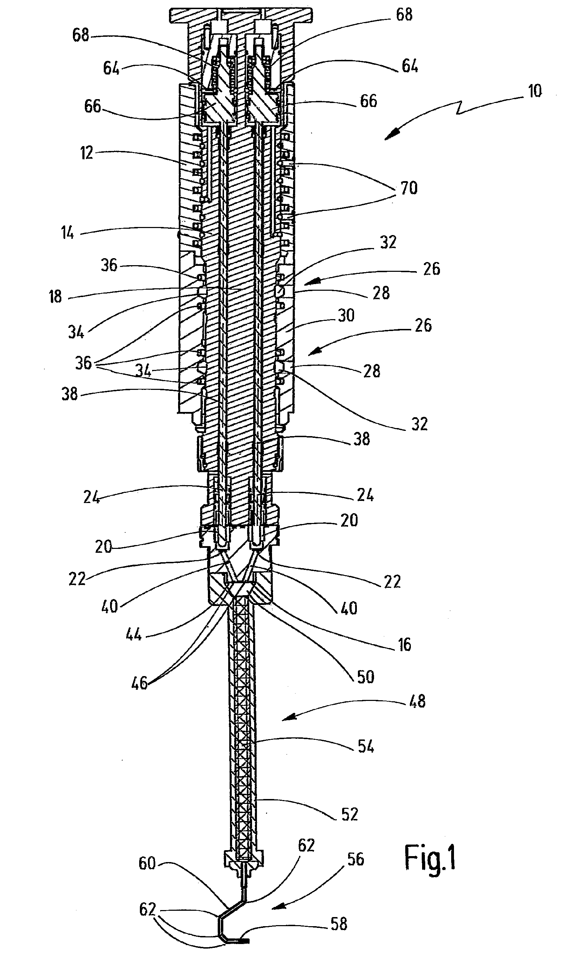

Die in Fig. 1 gezeigte Auftragsvorrichtung 10 für zweikomponentige, härtbare Klebstoffe weist ein Gehäuse 12 und eine im Gehäuse 12 aufgenommene, um eine Längsachse des Gehäuses 12 drehbare Auftragslanze 14 auf, die mit ihrer Spitze 16 aus dem Gehäuse 12 herausragt. In einem Körper 18 der Lanze 14 verlaufen zwei Materialzuführkanäle 20 parallel zur Gehäuselängsachse in Richtung zur Lanzenspitze 16. Die Materialzuführkanäle 20 sind jeweils an einem Ventilsitz 22 mittels eines Nadelventils 24 verschließbar. Die Einleitung der beiden Komponenten in den zugehörigen Materialzuführkanal 20 erfolgt mittels einer Drehdurchführung 26: Für jede Komponente ist eine Bohrung 28 im Gehäusemantel 30 vorgesehen, die in eine innen am Gehäuse 12 umlaufende Ringnut 32 mündet. Der Ringnut 32 im Gehäuse 12 liegt jeweils eine weitere Ringnut 34 gegenüber, die außen am Lanzenkörper 18 umläuft. In die Ringnut 34 am Lanzenkörper 18 mündet dann jeweils eine zu einem der Materialzuführkanäle 20 führende, in der Zeichnung nicht dargestellte radiale Bohrung, so dass über jedes Ringnutpaar 32,34 eine Komponente in einen der Materialzuführkanäle 20 eingeleitet werden kann. Es versteht sich von selbst, dass die Kombination der Ringnuten 32,34 lediglich beispielhaft zu sehen ist. Es ist auch möglich, dass lediglich im Gehäuse 12 eine Ringnut 32 angeordnet ist, während der Lanzenkörper 18 in diesem Bereich eine zylindrische Mantelfläche aufweist. Ebenso ist es möglich, dass nur im Lanzenkörper 18 eine Ringnut 34 angeordnet ist, während das Gehäuse 12 an dieser Stelle eine Innenfläche in Form eines Zylindermantels aufweist. Die Ringnutpaare 32,34 werden im gezeigten Ausführungsbeispiel jeweils durch umlaufende Dichtungen 36 abgedichtet.

Während die Materialzuführkanäle 20 über den größten Teil ihrer Länge parallel zueinander und parallel zur Gehäuselängsachse verlaufen und die Nadeln 38 der Nadelventile 24 längsverschieblich in ihnen aufgenommen sind, verlaufen die sich zwischen den Ventilsitzen 22 und der Lanzenspitze 16 erstreckenden Abschnitte 40 der Materialzuführkanäle 20 aufeinander zu bis jeweils zu einer in einer Stirnfläche 44 der Lanzenspitze 16 angeordneten Austrittsöffnung 46. An der Lanzenspitze 16 ist ein statischer Mischer 48 lösbar befestigt, der an seinem der Lanze 14 zugewandten Ende einen Trichter 50 aufweist, in den die Austrittsöffnungen 46 münden. An den Trichter 50 anschließend weist der Mischer 48 ein Kunststoffrohr 52 auf, in dem eine Mischwendel 54 angeordnet ist.

Am der Lanze 14 abgewandten Ende des Mischers 48 ist eine Auftragsdüse 56 lösbar befestigt, die einen sich vom Mischer 48 bis zu einer Auftragsöffnung 58 verlaufenden Materialauftragskanal 60 aufweist. Dieser verläuft nicht gerade, sondern weist mehrere gekrümmte Abschnitte 62 auf, so dass die Auftragsdüse 56 die Form eines Hakens hat und den aus dem Mischer 48 austretenden Klebstoff in Richtung zurück zur Lanze 14 aufträgt. Eine solche hakenförmige Auftragsdüse 46 wird insbesondere verwendet, um ein Werkstück an seiner Kante zu hintergreifen und an seiner Rückseite eine Klebstoffschicht aufzubringen.

Das Öffnen der Nadelventile 24 durch Abheben der Nadeln 38 von den Ventilsitzen 22 erfolgt jeweils durch Druckbeaufschlagung eines in einem im Gehäuse 12 aufgenommenen und fest mit der Lanze 14 verbundenen Zylinder 64 geführten, fest mit der jeweiligen Nadel 38 verbundenen Kolbens 66 entgegen der Kraft einer Rückstellfeder 68. Zur Druckbeaufschlagung des jeweiligen Kolbens 66 wird ein Druckmedium über eine weitere Drehdurchführung 70 in den jeweiligen Zylinder 64 eingeleitet, wobei die weitere Drehdurchführung 70 nach dem Prinzip der Drehdurchführung 26 aufgebaut ist. Entgegen dem gezeigten Ausführungsbeispiel kann jeweils auch ein doppelt wirkender Zylinder zum Einsatz kommen.

Gemäß einem zweiten Ausführungsbeispiel ist noch ein dritter Zuführkanal in der Lanze 14 vorgesehen, der dem Einleiten eines Spülmittels dient. Auch das Spülmittel wird, wie die beiden Klebstoffkomponenten, über eine Drehdurchführung in den Zuführkanal eingeleitet. Anders als beim ersten Ausführungsbeispiel ist in der Lanzenspitze 16 lediglich eine Austrittsöffnung 46 angeordnet, in die ein Endkanal 72 im Boden 74 der Lanze 14 mündet. Der Endkanal 72 ist durch eine Abdeckplatte 76 abgedeckt, in der sich die Ventilsitze 22 befinden. Die Materialzuführkanäle 20 münden an Mündungsstellen 78 in den Endkanal 72, die in einer sich zur Austrittsöffnung 46 erstreckenden Längsrichtung des Endkanals 72 in unterschiedlichen Abständen zur Austrittsöffnung 46 angeordnet sind. An jeder Mündungsstelle 78 verbreitert sich der Querschnitt des Endkanals 72, um die neu hinzukommende Materialmenge aufnehmen zu können. Der Zuführkanal für das Spülmittel mündet unterhalb des zugehörigen Ventilsitzes 22 am der Austrittsöffnung 46 abgewandten Ende des Endkanals 72 in diesen, so dass durch Einleitung des Spülmittels in den Endkanal 72 dieser auf der gesamten, die Klebstoffkomponenten aufnehmenden Länge durchgespült werden kann.

Zusammenfassend ist folgendes festzuhalten: Die Erfindung betrifft eine Vorrichtung 10 zum Auftragen einer einen mindestens zweikomponentigen, härtbaren Kleb- oder Dichtstoff aufweisenden pastösen Masse mit einem Gehäuse 12, mit einer im Gehäuse 12 aufgenommenen, um eine Gehäuselängsachse drehbaren Lanze 14, in deren Innerem für jede Komponente des Kleb- oder Dichtstoffs ein Materialzuführkanal 20 zu einer die Lanze 14 in axialer Richtung begrenzenden Lanzenspitze 16 verläuft, und mit einer Drehdurchführung 26 zur Einleitung der Komponenten des Kleb- oder Dichtstoffs durch einen Mantel 30 des Gehäuses 12 in den jeweiligen Materialzuführkanal 20, wobei jedem Materialzuführkanal 20 ein Schließventil 24 zugeordnet ist, durch das der Materialzuführkanal 20 an einem Ventilsitz 22 verschließbar ist.

### Bezugszeichenliste:

- 10: Auftragsvorrichtung
- 12: Gehäuse
- 14: Auftragslanze
- 16: Lanzenspitze
- 18: Körper
- 20: Materialzuführkanäle
- 22: Ventilsitz
- 24: Nadelventil
- 26: Drehdurchführung
- 28: Bohrung
- 30: Gehäusemantel
- 32,34: Ringnut
- 36: Dichtung
- 38: Nadel
- 40: konvergierende Abschnitte
- 44: Stirnfläche
- 46: Austrittsöffnung
- 48: Mischer
- 50: Trichter
- 52: Kunststoffrohr
- 54: Mischwendel
- 56: Auftragsdüse
- 58: Auftragsöffnung
- 60: Materialauftragskanal
- 62: gekrümmte Abschnitte
- 64: Zylinder
- 66: Kolben
- 68: Rückstellfeder
- 70: weitere Drehdurchführung
- 72: Endkanal
- 74: Boden
- 76: Abdeckplatte
- 78: Mündungsstelle

## Patentansprüche

1. Vorrichtung zum Auftragen einer einen mindestens zweikomponentigen, härtbaren Kleb- oder Dichtstoff aufweisenden pastösen Masse mit einem Gehäuse (12), mit einer im Gehäuse (12) aufgenommenen, um eine Gehäuselängsachse drehbaren Lanze (14), in deren Innerem für jede Komponente des Kleb- oder Dichtstoffs ein Materialzuführkanal (20) zu einer die Lanze (14) in axialer Richtung begrenzenden Lanzenspitze (16) verläuft, und mit einer Drehdurchführung (26) zur Einleitung der Komponenten des Kleb- oder Dichtstoffs durch einen Mantel (30) des Gehäuses (12) in den jeweiligen Materialzuführkanal (20), wobei jedem Materialzuführkanal (20) ein Schließventil (24) zugeordnet ist, durch das der Materialzuführkanal (20) an einem Ventilsitz (22) verschließbar ist, **dadurch gekennzeichnet, dass** die Materialzuführkanäle (20) jeweils in einen Endkanal (72) münden, der in eine Austrittsöffnung (46) an der Lanzenspitze (16) mündet.

2. Vorrichtung nach Anspruch 1, **gekennzeichnet durch** eine an der Lanze (14) lösbar befestigte Mischeinrichtung (48) zum Mischen der Komponenten unter Bildung des Kleb- oder Dichtstoffs, in die die Materialzuführkanäle (20) an der Lanzenspitze (16) münden.

3. Vorrichtung nach Anspruch 1 oder 2, **gekennzeichnet durch** eine an einer der Lanze (14) abgewandten Seite der Mischeinrichtung (48) oder an der Lanzenspitze (16) angeordnete Auftragsdüse (56), die eine Auftragsöffnung (58) zum Auftragen der pastösen Masse auf ein Werkstück und einen von der Mischeinrichtung (48) bzw. von der Lanzenspitze (16) bis zur Auftragsöffnung (58) verlaufenden, mindestens einen gekrümmten Abschnitt (62) aufweisenden Materialauftragskanal (60) zum Transport der pastösen Masse von der Mischeinrichtung (48) bzw. von der Lanzenspitze (16) zur Auftragsöffnung (58) aufweist.

4. Vorrichtung nach einem der vorangehenden Ansprüche, **dadurch gekennzeichnet, dass** die Schließventile (24) jeweils einen in einem im Gehäuse (12) angeordneten Zylinder (64) linear verschieblich aufgenommenen und durch ein Druckmedium beaufschlagbaren Kolben (66) aufweisen und dass eine weitere Drehdurchführung (70) zur Einleitung des Druckmediums durch den Mantel (30) des Gehäuses (12) in den jeweiligen Zylinder (64) vorgesehen ist.

5. Vorrichtung nach einem der vorangehenden Ansprüche, **dadurch gekennzeichnet, dass** die Materialzuführkanäle (20) gemessen in einer sich zur Austrittsöffnung (46) erstreckenden Längsrichtung des Endkanals (72) in unterschiedlichen Abständen zur Austrittsöffnung (46) in den Endkanal (72) münden.

6. Vorrichtung nach Anspruch 5, **dadurch gekennzeichnet, dass** sich der Querschnitt des Endkanals (72) zur Austrittsöffnung (46) hin vergrößert.

7. Vorrichtung nach Anspruch 6, **dadurch gekennzeichnet, dass** sich der Querschnitt des Endkanals (72) an jeder Stelle (78), an der ein Materialzuführkanal (20) in ihn mündet, vergrößert.

8. Vorrichtung nach einem der vorangehenden Ansprüche, **dadurch gekennzeichnet, dass** der Endkanal (72) in einem Boden (74) der Lanze (14) an der Lanzenspitze (16) angeordnet ist und durch eine die Ventilsitze (22) aufweisende Abdeckplatte (76) abgedeckt ist.

9. Vorrichtung nach einem der vorangehenden Ansprüche, **gekennzeichnet durch** einen im Inneren der Lanze (14) verlaufenden weiteren Zuführkanal für ein Spülmedium, der zur Lanzenspitze (16) verläuft und **durch** eine für das Einleiten des Spülmediums in den weiteren Zuführkanal bestimmte Drehdurchführung.

10. Vorrichtung nach Anspruch 9 und nach Anspruch 5, **dadurch gekennzeichnet, dass** der weitere Zuführkanal weiter von der Austrittsöffnung (46) entfernt in den Endkanal (72) mündet als die Materialzuführkanäle (20).

## Claims

1. Device for applying a paste-like compound containing an at least two-component, hardenable adhesive or sealant, with a housing (12), with a lance (14), rotatable around the longitudinal axis of the housing, accommodated within the housing (12), in the interior of which, for each component of the adhesive or sealant, a material feed channel (20) runs to a lance tip (16) limiting the lance (14) in an axial direction, and with a rotary feedthrough (26) for feeding the components of the adhesive or sealant through a jacket (30) of the housing (12) into the respective material feed channel (20), wherein each material feed channel (20) is assigned a closing valve (24) through which the material feed channel (20) can be closed against a valve seat (22), **characterised in that** the material feed channels (20) each open into an end channel (72) which opens into an outlet opening (46) at the lance tip (16).

2. Device according to claim 1, **characterised by** a mixing apparatus (48), detachably attached to the lance (14), for mixing the components to form the adhesive or sealant, into which the material feed channels (20) open at the lance tip (16).

3. Device according to claim 1 or 2, **characterised by** an application nozzle (56), arranged on the side of the mixing apparatus (48) opposite the lance (14) or on the lance tip (16), which has an application opening (58) for applying the paste-like compound to a workpiece and a material application channel (60) running from the mixing apparatus (48) or from the lance tip (16) to the application opening (58), with at least one curved section (62), for transporting the paste-like compound from the mixing apparatus (48) or from the lance tip (16) to the application opening (58).

4. Device according to any one of the preceding claims, **characterised in that** the closing valves (24) each have a piston (66) which can be loaded via a pressure medium, which piston (66) is accommodated, in a linearly displaceable manner, in a cylinder (64) arranged in the housing (12), and that a further rotary feedthrough (70) is provided in order to feed the pressure medium through the jacket (30) of the housing (12) into the respective cylinder (64).

5. Device according to any one of the preceding claims, **characterised in that** the material feed channels (20) open into the end channel (72) at different distances from the outlet opening (46), measured in a longitudinal direction of the end channel (72) extending towards the outlet opening (46).

6. Device according to claim 5, **characterised in that** the cross section of the end channel (72) enlarges towards the outlet opening (46).

7. Device according to claim 6, **characterised in that** the cross section of the end channel (72) enlarges at each point (78) at which a material feed channel (20) opens into it.

8. Device according to any one of the preceding claims, **characterised in that** the end channel (72) is arranged in a base (74) of the lance (14) at the lance tip (16) and is covered by a cover plate (76) containing the valve seats (22).

9. Device according to any one of the preceding claims, **characterised by** a further feed channel for a flushing medium running within the interior of the lance (14) which runs to the lance tip (16) and by a rotary feedthrough intended for the purpose of feeding the flushing medium into the further feed channel.

10. Device according to claim 9 and according to claim 5, **characterised in that** the further feed channel opens into the end channel (72) at a point further away from the outlet opening (46) than the material feed channels ((20).

## Revendications

1. Dispositif dévolu au dépôt d'une masse pâteuse présentant une substance durcissable à effet d'adhérence ou d'étanchement, constituée d'au moins deux composants, muni d'un boîtier (12) ; d'une lance (14) qui est logée dans le boîtier (12), peut tourner autour d'un axe longitudinal dudit boîtier, et dans l'espace interne de laquelle un canal (20) d'amenée de matière, attribué à chaque composant de ladite substance à effet d'adhérence ou d'étanchement, s'étend vers une pointe (16) délimitant ladite lance (14) dans le sens axial ; et d'une traversée rotative (26) conçue pour introduire lesdits composants de la substance à effet d'adhérence ou d'étanchement dans le canal respectif (20) d'amenée de matière, à travers une enveloppe (30) dudit boîtier (12), sachant qu'une soupape de fermeture (24), affectée à chaque canal (20) d'amenée de matière, permet de clore ledit canal (20) d'amenée de matière contre un siège d'obturation (22), **caractérisé par le fait que** les canaux (20) d'amenée de matière débouchent, à chaque fois, dans un canal d'extrémité (72) débouchant dans un orifice de sortie (46), au niveau de la pointe (16) de la lance.

2. Dispositif selon la revendication 1, **caractérisé par** un système mélangeur (48) qui est fixé à la lance (14) de manière amovible, est conçu pour mélanger les composants avec formation de la substance à effet d'adhérence ou d'étanchement, et dans lequel les canaux (20) d'amenée de matière débouchent au niveau de la pointe (16) de ladite lance.

3. Dispositif selon la revendication 1 ou 2, **caractérisé par** une buse applicatrice (56) placée sur un côté du système mélangeur (48) tourné à l'opposé de la lance (14), ou au niveau de la pointe (16) de ladite lance, et comprenant un orifice d'application (58) destiné à déposer la masse pâteuse sur une pièce, et un canal (60) de dépôt de matière qui s'étend jusqu'audit orifice d'application (58), respectivement à partir du système mélangeur (48) ou de la pointe (16) de la lance, et est doté d'au moins une région arquée (62), en vue d'acheminer ladite masse pâteuse jusqu'audit orifice d'application (58), respectivement à partir dudit système mélangeur (48) ou de ladite pointe (16) de la lance.

4. Dispositif selon l'une des revendications précédentes, **caractérisé par le fait que** les soupapes de fermeture (24) sont respectivement pourvues d'un piston (66) pouvant être sollicité par un fluide pressurisé et logé, à coulissement linéaire, dans un cylindre (64) situé dans le boîtier (12) ; et **par le fait qu'**une traversée rotative supplémentaire (70) est prévue pour introduire ledit fluide pressurisé dans le cylindre (64) respectif, à travers l'enveloppe (30) dudit boîtier (12).

5. Dispositif selon l'une des revendications précédentes, **caractérisé par le fait que**, mesurés dans une direction longitudinale du canal d'extrémité (72) s'étendant vers l'orifice de sortie (46), les canaux (20) d'amenée de matière débouchent dans ledit canal d'extrémité (72) à des distances différentes par rapport audit orifice de sortie (46).

6. Dispositif selon la revendication 5, **caractérisé par le fait que** la section transversale du canal d'extrémité (72) croît en direction de l'orifice de sortie (46).

7. Dispositif selon la revendication 6, **caractérisé par le fait que** la section transversale du canal d'extrémité (72) croît à chaque emplacement (78) auquel un canal (20) d'amenée de matière débouche dans ledit canal.

8. Dispositif selon l'une des revendications précédentes, **caractérisé par le fait que** le canal d'extrémité (72) se trouve dans un fond (74) de la lance (14), au niveau de la pointe (16) de ladite lance, et est coiffé par une platine de recouvrement (76) pourvue des sièges d'obturation (22).

9. Dispositif selon l'une des revendications précédentes, **caractérisé par** un canal supplémentaire d'amenée d'un fluide de rinçage, qui s'étend dans l'espace interne de la lance (14) vers la pointe (16) de ladite lance ; et par une traversée rotative destinée à introduire ledit fluide de rinçage dans ledit canal supplémentaire d'amenée.

10. Dispositif selon la revendication 9 et selon la revendication 5, **caractérisé par le fait que** le canal supplémentaire d'amenée débouche, dans le canal d'extrémité (72), en étant davantage éloigné de l'orifice de sortie (46) que les canaux (20) d'amenée de matière.
